# EUROPÄISCHE PATENTSCHRIFT

(11) **EP 0 701 579 B1**
(45) Veröffentlichungstag und Bekanntmachung des Hinweises auf die Patenterteilung: **09.09.1998**
(21) Anmeldenummer: 95914300.9
(22) Anmeldetag: 23.03.1995
(51) Int. Cl.: C08G 18/42, C09D 175/06

(54) **ÜBERZUGSMITTEL FÜR TRANSPARENTE DECKLACKSCHICHTEN UND DEREN VERWENDUNG BEI VERFAHREN ZUR HERSTELLUNG VON MEHRSCHICHTÜBERZÜGEN**
COATING AGENTS FOR THE PRODUCTION OF TRANSPARENT FINISHING COATS AND THE USE OF SUCH COATING AGENTS IN THE PRODUCTION OF MULTI-COAT COATINGS
AGENTS DE REVETEMENT POUR COUCHES TRANSPARENTES DE VERNIS DE FINITION ET LEUR UTILISATION DANS LA FABRICATION DE REVETEMENTS MULTICOUCHES

(30) Priorität: 26.03.1994 DE 4410609
(43) Veröffentlichungstag der Anmeldung: 20.03.1996
(73) Patentinhaber: Herberts Gesellschaft mit beschränkter Haftung, 42285 Wuppertal (DE)
(72) Erfinder: BEDERKE, Klaus, D-45549 Sprockhövel (DE); HERRMANN, Friedrich, D-42117 Wuppertal (DE); KERBER, Hermann, D-42369 Wuppertal (DE); KUTZNER, Thomas, D-45549 Sprockhövel (DE); REIFFERSCHEIDT, Heinz-Walter, D-44803 Bochum (DE)
(74) Vertreter: Türk, Gille, Hrabal, Leifert
(86) Internationale Anmeldenummer: EP9501095
(87) Internationale Veröffentlichungsnummer: WO9526375

(56) Entgegenhaltungen:
- EP-A- 0 314 447
- WO-A-93/07932
- WO-A-93/15849
- DE-A- 4 226 270
- DATABASE WPI Week 8931, Derwent Publications Ltd., London, GB; AN 223234 'THERMOSETTING CLEAR COATING COMPOSITION' & JP,A,1 158 079 (MITSUBISHI RAYON) 21. Juni 1989 in der Anmeldung erwähnt

## Beschreibung

Die Erfindung betrifft nicht-wäßrige Überzugsmittel, die insbesondere für transparente aber auch pigmentierte Einbrenn-Mehrschichtüberzüge, beispielsweise bei der Autoserienlackierung geeignet sind, die sich durch eine hohe Beständigkeit gegen den "sauren Regen" (Acid-Rain-Resistance) und einen hohen Verarbeitungsfestkörper auszeichnen.

Das japanische Patent KOKAI No. 1(1989)-158079 beschreibt Überzugsmittel auf der Basis von Caprolacton-modifizierten und gegebenenfalls zusätzlich Hydroxyalkyl(meth)acrylate enthaltenden Polyacrylatharzen, alkylierten Melaminharzen und gegebenenfalls geblockten Polyisocyanaten. Mit derartigen Überzugsmitteln können zwar festkörperreiche Automobillackierungen hergestellt werden, das in der Technik geforderte Eigenschaftsniveau bezüglich Acid-Rain-Resistance wird jedoch nicht erreicht. Die Klarlacke neigen zum Vergilben und besitzen einen geringen Anfangsglanz.

Die der DE-A-42 04 518 entsprechende WO-A-9 315 849 beschreibt nicht-wäßrige transparente Decklacke auf der Basis von hydroxylgruppenhaltigen Kunstharzen, Aminoplastharzen und blockierten Polyisocyanaten, wobei letztere sowohl mit Dialkylmalonaten als auch mit Methylengruppen enthaltenden Blockierungsmitteln oder Oximen blockiert sind. Auch hier ist die Säurebeständigkeit der erhaltenen Lackierungen nicht voll zufriedenstellend.

Aufgabe der vorliegenden Erfindung war es, nicht-wäßrige Überzugsmittel für Einbrenn-Mehrschichtüberzüge insbesondere für die Automobilserienlackierung bereitzustellen, die sowohl einen hohen Verarbeitungsfestkörper (High-Solid) aufweisen, als auch zu Überzügen mit einer hohen Säurebeständigkeit, insbesondere einer verbesserten Beständigkeit gegen Schwefelsäure führen.

Es hat sich gezeigt, daß die Forderung nach schwefelsäurebeständigen und gleichzeitig festkörperreichen Beschichtungsmitteln durch nicht-wäßrige Überzugs mittel erfüllt werden kann, welche eines oder mehrere hydroxylfunktionelle (Meth)acryl-Copolymerisate, carboxyfunktionelle, geblockte Urethan-Prepolymere, Vernetzungsmittel und gegebenenfalls hydroxylfunktionelle Polyesterharze, lackübliche Additive und Lösemittel enthalten. Die Überzugsmittel sind dadurch gekennzeichnet, daß sie Bindemittel enthalten auf der Basis von
- A) 5,0 bis 40,0 Gew.-%: eines oder mehrerer carboxylfunktioneller Urethan-Prepolymerer, mit einer Hydroxylzahl von 0 bis 80, einer Säurezahl von 5 bis 50 und einem Gewichtsmittel des Molekulargewichts (Mw) von 500 bis 5000, die erhältlich sind durch Reaktion von:
- a1) 10 bis 50 Mol-%: eines oder mehrerer Alkandiole oder Cycloalkandiole,
- a2) 10 bis 30 Mol-%: einer oder mehrerer Polycarbonsäuren oder deren Anhydriden,
- a3) 0 bis 30 Mol-%: eines oder mehrerer Polyole mit mindestens drei OH-Gruppen im Molekül,
- a4) 0 bis 20 Mol-%: einer oder mehrerer Hydroxycarbonsäuren mit mindestens einer Hydroxylgruppe und mindestens einer Carboxylgruppe im Molekül,
- a5) 10 bis 40 Mol-%: eines oder mehrerer aliphatischer, cycloaliphatischer und/oder araliphatischer Diund/oder Polyisocyanate, und
- a6) 10 bis 40 Mol-%: eines oder mehrerer monofunktioneller Blokkierungsmittel für freie NCO-Gruppen,
wobei die Summe der Mol-% a1) bis a6) sich jeweils zu 100 Mol-% ergänzt,
- B) 30,0 bis 70,0 Gew.-%: eines oder mehrerer hydroxylgruppenhaltiger (Meth)acryl-Copolymerisate, mit einem Gewichtsmittel der Molmasse (Mw) von 2000 bis 20000, einer Säurezahl von 1 bis 50 mg KOH/g und einer OH-Zahl von 30 bis 200,
- C) 0 bis 50,0 Gew.-%: eines oder mehrerer hydroxylfunktioneller Polyester mit einer OH-Zahl von 40 bis 200 und
- D) 5,0 bis 40,0 Gew.-%: eines oder mehrerer zusätzlicher von der Komponente A) verschiedener Vernetzungsmittel,
wobei die Summe der Gew.-% der Komponenten A) bis D) sich jeweils zu 100 Gew.-% ergänzt.

Die im erfindungsgemäßen Überzugsmittel enthaltenen carboxyl- und gegebenenfalls auch hydroxyfunktionellen, geblockten Urethan-Prepolymeren (Komponente A) können auf verschiedene Weise aus den Komponenten a1) bis a6) hergestellt werden. Die Herstellung kann im Eintopfverfahren oder bevorzugt stufenweise erfolgen. Stufenweise können sie beispielsweise hergestellt werden durch Veresterung von Alkandiolen mit Polycarbonsäuren oder deren Anhydriden, gegebenenfalls unter Verwendung von Polyolen und/oder Hydroxycarbonsäuren mit mindestens einer Hydroxylgruppe und mindestens einer Carboxylgruppe im Molekül, zu oligomeren OH-und COOH-funktionellen Polykondensaten. Die Umsetzung der Reaktanten kann bei erhöhter Temperatur vorgenommen werden, z.B. bei Temperaturen von 120 bis 240°C, bis der gewünschte Polykondensationsgrad erreicht ist.

Anschließend kann das so erhaltene Polykondensat-Vorprodukt mit aliphatischen, cycloaliphatischen und/oder araliphatischen Di- und/oder Polyisocyanaten bei erhöhter Temperatur, z.B. bei 40 bis 100°C, umgesetzt werden.

Die aus der Urethanisierung verbliebenen überschüssigen NCO-Gruppen werden mit üblichen Blockierungsmitteln, z.B. CH-aciden, NH- und/oder OH-funktionellen Verbindungen vollständig umgesetzt. Beispiele für CH-acide Verbindungen sind Acetessigester, Acetylaceton, Dialkylmalonat, wie Diethylmalonat; Beispiele für OH-funktionelle Verbindungen sind Alkanon-Oxime, Alkanole und Phenole; Beispiele für NH-Verbindungen sind Lactame, wie Caprolactam, NH-funktionelle Heterocyclen, wie Imidazol- und Pyrazolderivate. Die Blockierungsmittel können einzeln oder im Gemisch eingesetzt werden. Die carboxyl- und gegebenenfalls hydroxylfunktionellen geblockten Urethan-Prepolymeren weisen zweckmäßig eine NCO-Zahl unter 0,1 auf.

Die als Komponente a1) verwendbaren Alkandiole und Cycloalkandiole sind insbesondere niedermolekulare Verbindungen. Beispiele sind Alkandiole mit 2 bis 6 Kohlenstoffatomen, wie Ethylenglykol, Propandiol, Butandiol, Neopentylglykol und Hexandiol; Beispiele für Cycloalkandiole sind solche mit 5 oder 6 Kohlenstoffatomen, wie Cyclohexandiol, aber auch Verbindungen wie Cyclohexandimethanol. Besonders bevorzugte Alkandiole, sind solche, die in der 2-Stellung verzweigt sind. Besonders bevorzugt sind 2,2-Dialkyl-alkandiole, insbesondere solche mit mehr als 5 C-Atomen im Molekül. Besonders bevorzugt sind 2,2-Dialkyl-alkandiole-1,3, insbesondere mit mehr als 5 C-Atomen im Molekül; Beispiele hierfür sind 2-Ethyl-2-butylpropandiol-1,3, 2-Ethyl-2-hexylpropandiol-1,3, 2-Ethyl-2-ethylhexylpropandiol-1,3, 2,2-Di-tert.-Butylpropandiol-1,3, 2,2-Diethylpropandiol-1,3. Bevorzugt werden 2-Ethyl-2-hexylpropandiol-1,3 und 2,2-Di-Ethylpropandiol-1,3 eingesetzt.

Als Komponente a2) werden Polycarbonsäuren oder deren Anhydride, insbesondere Dicarbonsäuren eingesetzt. Diese können aromatisch und bevorzugt aliphatisch oder cycloaliphatisch sein. Beispiele für aromatische Dicarbonsäuren sind Phthalsäure, Terephthalsäure, Isophthalsäure und Trimellithsäure. Beispiele für aliphatische Dicarbonsäuren sind Bernsteinsäure, Adipinsäure, Sebacinsäure, Dodecandicarbonsäure. Besonders bevorzugt werden cycloaliphatische Dicarbonsäuren, beispielsweise 1,2-, 1,3- und 1,4-Cyclohexandicarbonsäure und 1,2-Cyclohexandicarbonsäureanhydrid.

Als Komponente a3) können Polyole mit mindestens drei OH-Gruppen im Molekül eingesetzt werden. Diese enthalten bevorzugt mindestens zwei primäre OH-Gruppen. Beispiele hierfür sind Trimethylolpropan und Pentaerythrit. Besonders bevorzugt sind solche Polyole, die neben den mindestens zwei primären OH-Gruppen mindestens eine sekundäre OH-Gruppe aufweisen. Beispiele hierfür sind Glycerin und Hexantriol-1,2,6.

Als Komponente a4) können Hydroxycarbonsäuren eingesetzt werden. Besonders bevorzugt werden Hydroxycarbonsäuren mit tertiär gebundener Carboxylgruppe verwendet. Bevorzugte Beispiele hierfür sind 2,2-Dialkylomega-hydroxyalkyl-carbonsäuren-1, wobei die Alkylreste beispielsweise 1 bis 6 Kohlenstoffatome aufweisen. Spezielle Beispiele sind 2,2-Dimethylolpropionsäure und 3-Hydroxypivalinsäure.

Als Diisocyanate und Polyisocyanate (Komponente a5) sind insbesondere aliphatische, cycloaliphatische und araliphatische geeignet. Als Diisocyanate werden bevorzugt Hexamethylen-1,6-diisocyanat, 3,5,5-Trimethylhexamethylen-1,6-diisocyanat, Isophorondiisocyanat, 1,3-Bis(isocyanatomethyl)cyclohexan, Bis-isocyanato-cyclohexylmethan, Tetramethylxylylendiisocyanat (TMXDI) verwendet.

Als Polyisocyanate (Komponente a5) sind weiterhin beispielsweise geeignet Biuret-Gruppen enthaltende Polyisocyanate, z.B. Umsetzungsprodukte aus 3 Molen Hexamethylendiisocyanat mit 1 Mol Wasser mit einem NCO-Gehalt von ca. 22 %, oder Isocyanuratgruppen enthaltende Polyisocyanate, die z.B. durch Trimerisierung von 3 Molen Hexamethylendiisocyanat hergestellt werden mit einem NCO-Gehalt von etwa 21,5 %, oder Urethangruppen enthaltende Polyisocyanate, welche z.B. Reaktionsprodukte darstellen aus 3 Molen aliphatischen oder cycloaliphatischen Diisocyanaten mit 1 Mol Triol, z.B. Trimethylolpropan. Bevorzugt eingesetztes aliphatisches Diisocyanat ist das Isophorondiisocyanat.

Als Blockierungsmittel (Komponente a6) können für Blockierungszwecke übliche, beispielsweise CH-acide, NH- oder OH-funktionelle Verbindungen verwendet werden, die unter Härtungsbedingungen die Vernetzung mit hydroxylfunktionellen Bindemitteln ermöglichen. Spezielle Beispiele für verwendbare Blockierungsmittel sind die gleichen wie sie vorstehend bereits angegeben wurden. Dabei kann es günstig sein, verschiedene Verkappungsmittel gleichzeitig zur Anwendung zu bringen, was innerhalb eines Polyisocyanatmoleküls oder im Gemisch erfolgen kann.

Bei der Herstellung der Komponente A) werden die Komponenten a1) bis a6) in solchen Verhältnissen eingesetzt, daß sich die angestrebten Hydroxylzahlen, Säurezahlen und Molekulargewichte ergeben und eine latente NCO-Zahl von über 3 erzielt wird. Unter latenter NCO-Zahl ist die NCO-Zahl zu verstehen, die sich bei vollständiger Abspaltung der Blokkierungsmittel ergibt.

Die Herstellung der in dem erfindungsgemäßen Überzugsmittel enthaltenen (Meth)acryl-Copolymerisate (Komponente B) kann beispielsweise durch Polymerisation nach üblichen Verfahren, z.B. der Substanz-, Lösungs- oder Perlpolymerisation durchgeführt werden. Die verschiedenen Polymerisationsverfahren sind gut bekannt und werden beispielsweise beschrieben in Houben-Weyl, Methoden der Organischen Chemie, 4. Aufl., Band 14/1, S. 24 - 255 (1961).

Das Lösungspolymerisationsverfahren wird für die Herstellung der im erfindungsgemäßen Überzugsmittel eingesetzten (Meth)acryl-Copolymerisate bevorzugt. Bei diesem Verfahren wird das Lösemittel in das Reaktionsgefäß vorgelegt, auf Siedetemperatur geheizt und das Monomeren/Initiatorgemisch kontinuierlich in einer bestimmten Zeit zudosiert. Die Lösungspolymerisation kann aber auch so durchgeführt werden, daß die Zugabe der Monomeren zeitlich versetzt, d.h. alternierend oder nacheinander erfolgt.

Die Polymerisation wird beispielsweise bei Temperaturen zwischen 60°C und 160°C, vorzugsweise bei 80°C bis 140°C durchgeführt.

Die Polymerisationsreaktion kann mit bekannten Polymerisationsinitiatoren gestartet werden. Geeignete Initiatoren sind übliche Per- und Azo-Verbindungen, die in einer Reaktion erster Ordnung thermisch in Radikale zerfallen. Initiatorart und -menge werden so gewählt, daß bei der Polymerisationstemperatur während der Zulaufphase ein möglichst konstantes Radikalangebot vorliegt.

Beispiele für bevorzugt eingesetzte Initiatoren für die Polymerisation sind: Dialkylperoxide, wie Di-tert.-Butylperoxid, Di-cumylperoxid; Diacylperoxide, wie Di-benzoylperoxid, Di-lauroylperoxid; Hydroperoxide, wie Cumolhydroperoxid, tert.-Butylhydroperoxid; Perester, wie tert.-Butyl-perbenzoat, tert.-Butyl-perpivalat, tert.-Butyl-per-3,5,5-trimethylhexanoat, tert.-Butyl-per-2-ethylhexanoat; Peroxydicarbonate, wie Di-2-ethylhexyl-peroxydicarbonat, Dicyclo-hexyl-peroxydicarbonat; Perketale, wie 1,1-Bis-(tert.-Butylperoxy)-3,5,5-trimethylcyclohexan, 1,1-Bis-(tert.-Butylperoxy)cyclohexan; Ketonperoxide, wie Cyclohexanonperoxid, Methylisobutylketonperoxid; Azo-Verbindungen, wie 2,2'-Azo-bis(2,4-dimethylvaleronitril), 2,2'-Azo-bis(2-methylbutyronitril), 1,1'-Azo-bis-cyclohexancarbonitril, Azo-bis-isobutyronitril.

Die Polymerisationsinitiatoren, insbesondere die Perester, werden bevorzugt in einer Menge von 0,2 bis 5 Gew.-% auf die Monomeren-Einwaage, eingesetzt.

Als organische Lösemittel, die zweckmäßigerweise bei der Lösungspolymerisation sowie später auch in dem erfindungsgemäßen Überzugsmittel eingesetzt werden, eignen sich beispielsweise Glykolether, wie Ethylenglykoldimethylether; Glykoletherester, wie Ethylglykolacetat, Butylglykolacetat, 3-Methoxy-n-butylacetat, Butyldiglykolacetat, Methoxypropylacetat, Ester, wie Butylacetat, Isobutylacetat, Amylacetat; Ketone, wie Methylethylketon, Methylisobutylketon, Diisobutylketon, Cyclohexanon, Isophoron; Alkohole, wie Methanol, Ethanol, Propanol, Butanol; aromatische Kohlenwasserstoffe, wie Xylol, Solvesso 100 (eingetragenes Warenzeichen) und aliphatische Kohlenwasserstoffe können ebenfalls insbesondere im Verschnitt mit den oben genannten Lösemitteln eingesetzt werden.

Zur Regelung des Molekulargewichts können insbesondere bei der bevorzugten Lösungspolymerisation übliche Kettenüberträger mitverwendet werden. Beispiele sind funktionalisierte oder nicht-funktionalisierte Mercaptane, wie Mercaptoethanol, n-Octylmercaptan, Thioglykolsäureester, Chlor-Kohlenwasserstoffe, Cumol, dimeres alpha-Methylstyrol.

Die Polymerisationsbedingungen (Reaktionstemperatur, Zulaufzeit der Monomerenmischung, Lösungskonzentration) werden so eingerichtet, daß die (Meth)acryl-Copolymerisate für das erfindungsgemäß hergestellte Überzugsmittel ein Gewichtsmittel der Molmasse (Mw) (bestimmt durch Gelpermeationschromatographie unter Verwendung von Polystyrol als Eichsubstanz) zwischen 2000 bis 20000 aufweisen.

Die hydroxylgruppenhaltigen (Meth)acryl-Copolymerisate des erfindungsgemäß hergestellten Überzugsmittels liegen bevorzugt in einem Glasübergangstemperatur-Bereich von -20°C bis +80°C, berechnet aus den in der Literatur angegebenen Glasübergangstemperaturen der Homopolymerisate der einzelnen Monomeren (FOX-Gleichung, siehe z.B. Polymere Werkstoffe, Batzer, 1985, Seite 307).

Als Monomerkomponente für die Herstellung der hydroxylgruppenhaltigen (Meth)acryl-Copolymerisate (Komponente B) werden bevorzugt Alkylester der Acrylsäure und/oder Methacrylsäure eingesetzt. Unter (meth)acryl wird hier acryl und/oder methacryl verstanden. Beispiele hierfür sind: Methylacrylat, Methylmethacrylat, Ethylacrylat, Ethylmethacrylat, Isopropylmethacrylat, tert.-Butylacrylat, n-Butylacrylat, n-Butylmethacrylat, Isobutylacrylat, Isobutylmethacrylat, Cyclohexylmethacrylat, Trimethylcyclohexylmethacrylat, 4-tert.-Butyl-cyclohexylmethacrylat, 2-Ethylhexylacrylat, 2-Ethylhexylmethacrylat, Laurylacrylat, Laurylmethacrylat, Stearylacrylat, Stearylmethacrylat, Isobornylacrylat, Isobornylmethacrylat; Hydroxyalkylester der Acrylsäure oder Methacrylsäure, wie beta-Hydroxyethylacrylat, beta-Hydroxyethylmethacrylat, beta-Hydroxypropylacrylat, beta-Hydroxypropyl-methacrylat, Butandiol-1,4-monoacrylat, Butandiol-1,4-monomethacrylat, Hexandiol-1,6-monoacrylat, Hexandiol-1,6-monomethacrylat.

Es können auch, zumindest teilweise, Polyalkylenoxid-mono-(meth)-acrylate mit 2 bis 10 Alkylenoxid-Einheiten pro Molekül eingesetzt werden.

Ferner können Umsetzungsprodukte aus Hydroxyalkyl-(meth)-acrylat mit epsilon-Caprolacton verwendet werden.

Zur Ausstattung des (Meth)acryl-Copolymerisats mit Carboxylgruppen können ungesättigte Säuren einpolymerisiert werden, wie beispielsweise (Meth)acrylsäure, Maleinsäure, Fumarsäure und deren Halbester. Sie werden in solchen Mengen einpolymerisiert, daß für die Komponente B) eine Säurezahl von 1 bis 50 mg KOH/g resultiert.

Zur Herstellung der Copolymeren können auch Comonomere mitverwendet werden, die sich von den (Meth)acrylmonomeren unterscheiden. Beispielsweise geeignet sind Vinylmonomere, wie Vinylaromaten, z.B. Styrol, Vinyltoluol, p-Methylstyrol und p-tertiär-Butylstyrol; Vinylether, wie Isobutylvinylether; Vinylester, wie Vinylacetat, Vinylpropionat, Vinylbenzoat, p-tert.-Butylvinylbenzoat und Vinylneodecanoat. Die Comonomeren können in Mengen bis zu 50 Gew.-%, beispielsweise 10 bis 50 Gew.-%, bevorzugt 10 bis 30 Gew.-%, jeweils bezogen auf das Gewicht der gesamten Monomeren, eingesetzt werden.

Es können auch anteilig mehrfach ungesättigte Monomere eingesetzt werden, z.B. Divinylbenzol, Ethylenglykoldi(meth)acrylat, Butandioldi-(meth)acrylat. Derartige Monomere werden in geringen Mengen zugegeben, d.h. in solchen Mengen, daß die erhaltenen Produkte nicht gelieren.

Die als Komponente C) wahlfrei eingesetzten hydroxyfunktionellen Polyester stellen Polykondensationsprodukte dar aus Polycarbonsäuren (z.B. Dicarbonsäuren) oder deren Anhydriden und mehrwertigen Polyolen (z.B. Diolen), gegebenenfalls unter Mitwirkung von Monocarbonsäuren. Derartige Polyester werden in der Regel mit einem Alkohol-Überschuß hergestellt. Die OH-Zahlen liegen bei 40 bis 200, vorzugsweise bei 60 bis 160 mg KOH/g, die Säurezahlen beispielsweise bei 1 bis 50, vorzugsweise bei 5 bis 30. Die gewichtsmittleren Molekulargewichte betragen beispielsweise 500 bis 4000, vorzugsweise 1000 bis 2000 g/Mol.

Als Polycarbonsäuren werden bevorzugt aliphatische oder cycloaliphatische Polycarbonsäuren eingesetzt. Es können aber auch aromatische Polycarbonsäuren verwendet werden. Beispiele für aliphatische Polycarbonsäuren sind Bernsteinsäure oder deren Anhydrid, Glutarsäure, Adipinsäure, Azelainsäure, Sebacinsäure, Butantetracarbonsäure und Dimer-Fettsäure. Beispiele für cycloaliphatische Polycarbonsäuren sind Tetrahydrophthalsäure oder deren Anhydrid, 1,2-Cyclohexandicarbonsäure oder deren Anhydrid, 1,3-Cyclohexandicarbonsäure, 1,4-Cyclohexandicarbonsäure, 4-Methylhexahydrophthsäure oder deren Anhydrid, Endomethylentetrahydrophthalsäure oder deren Anhydrid, Trimellithsäure oder deren Anhydrid. Beispiele für aromatische Polycarbonsäuren sind o-Phthalsäure oder deren Anhydrid, Isophthalsäure und Terephthalsäure.

Die Polyester können auch geringe Anteile an Maleinsäureanhydrid einkondensiert enthalten. Gegebenenfalls können zusammen mit den oben genannten Polycarbonsäuren auch natürliche und synthetische Monocarbonsäuren eingesetzt werden, wie z.B. Benzoesäure, tert.-Butylbenzoesäure, Laurinsäure, Isononansäure und Fettsäuren aus natürlich vorkommenden Ölen.

Geeignete Polyolkomponenten zur Herstellung der Polyester sind Diole, wie Ethylenglykol, Diethylenglykol, Triethylenglykol, Polyethylenglykole, Propandiole, Polypropylenglykole, Butandiole, Hexandiole, Neopentylglykol, Cyclohexandiol, Cyclohexandimethanol, Trimethylpentandiol, Ethylbutylpropandiol, sowie mehrwertige Alkohole, wie z.B. Trimethylolethan, Trimethylolpropan, Di-trimethylolpropan, Glycerin, Pentaerythrit, Di-pentaerythrit, Tris-hydroxyethylisocyanurat.

Die Polyester können als Modifizierungskomponente Glycidylester von alpha,alpha-disubstituierten Monocarbonsäuren und epsilon-Caprolacton enthalten.

Die erfindungsgemäßen Überzugsmittel enthalten als Komponente D) zusätzliche lackübliche Vernetzungsmittel, beispielsweise und bevorzugt Aminoplastharze und/oder lackübliche blockierte und/oder nichtblockierte Di- und Polyisocyanate.

Die erfindungsgemäßen Überzugsmittel enthalten als Komponente D) besonders bevorzugt Aminoplastharze.

Es können übliche Aminoplastharze verwendet werden. Beispiele für Aminoplastharze sind alkylierte Kondensate, die durch Umsetzung von Aminotriazinen und Amidotriazinen mit Aldehyden hergestellt werden. Nach bekannten technischen Verfahren werden Amino- oder Amidogruppen tragende Verbindungen wie Melamin, Benzoguanamin, Dicyandiamid, Harnstoff, N,N'-Ethylenharnstoff in Gegenwart von Alkoholen, wie Methyl-, Ethyl-, Propyl-, iso-Butyl-, n-Butyl- und Hexylalkohol mit Aldehyden, insbesondere Formaldehyd, kondensiert. Die Reaktivität derartiger Aminharze wird bestimmt durch den Kondensationsgrad, das Verhältnis der Amin-bzw. Amid-Komponente zum Formaldehyd und durch die Art des verwendeten Verätherungsalkohols. Bevorzugt eingesetzt werden Melaminharze, die mit n- oder iso-Butanol verethert sind und deren Veretherungsgrad ≤ 1,0 ist.

Die Aminoplastharze können auch zusammen mit Polyisocyanaten vorliegen. Der Anteil an Aminoplastharzen im Gemisch beträgt dabei vorzugsweise mindestens 50 Gew.-%, bezogen auf das Gewicht der Komponente D).

Die Polyisocyanate, die im Gemisch mit den Aminoplastharzen, aber auch allein als Vernetzerkomponente D) eingesetzt werden können sind Di- und Polyisocyanate, die von der Komponente A) unterschiedlich sind. Sie können z.B. den unter der Definition von a5) beschriebenen entsprechen.

Die Polyisocyanatvernetzer können partiell oder, falls ein über längere Zeit lagerfähiges, d.h. einkomponentiges Überzugsmittel gewünscht ist, vollständig mit aktiven Wasserstoff enthaltenden, monofunktionellen Verbindungen blockiert sein. Die Wahl des unter Rückbildung der freien Isocyanatgruppen thermisch wieder abspaltbaren Blockierungsmittels richtet sich nach den herrschenden Einbrennbedingungen bei der Aushärtung des erfindungsgemäßen Überzugsmittels. Beispiele für geeignete Blockierungsmittel sind die gleichen wie für a6) bereits beschrieben. Bevorzugt werden die Polyisocyanatvernetzer verkappt eingesetzt.

Die erfindungsgemäßen Überzugsmittel können neben den bereits genannten Lösemitteln zusätzlich lackübliche Hilfsstoffe enthalten, z.B.: Verlaufsmittel, beispielsweise auf der Basis von (Meth)acryl-Homopolymerisaten, Silikonöle, Weichmacher wie Phosphorsäure-, Phthalsäure-, oder Zitronensäureester, Mattierungsmittel, wie pyrogenes Siliziumoxid. Rheologie-Beeinflusser, wie Mikrogele, N A D (=non-aqueous-dispersions), disubstituierte Harnstoffe ("sagging control agents"), hydriertes Ricinusöl. Härtungsbeschleuniger für die Umsetzung des (Meth)acryl-Copolymerisats mit Aminoplastharzen oder den carboxylfunktionellen geblockten Urethan-Prepolymeren, z.B. Phosphorsäure, Phosphorsäureester, Dicarbonsäure-Halbester, Zitronensäure; organische Metallsalze, wie Dibutylzinndilaurat, Zink-Naphthenat, ferner tertiäre Aminogruppen enthaltende Verbindungen wie Triethylamin.

Die erfindugsgemäßen Überzugsmittel werden in nicht-wäßriger Form formuliert.

Die erfindungsgemäßen Überzugsmittel sind besonders geeignet zur Erzeugung einer transparenten Deckschicht (Klarlackschicht) bei der Herstellung ofentrocknender Mehrschichtüberzüge. Die Deckschicht kann beispielsweise nach dem Naß-in-Naß-Verfahren aufgetragen werden, worauf beide Schichten gemeinsam gehärtet werden. Die Erfindung betrifft daher auch das Verfahren zur Herstellung von Mehrschicht-Überzügen bzw. die Verwendung der Überzugsmittel zu deren Herstellung. Die erfindungsgemäßen lösemittelhaltigen Überzugsmittel können dabei als transparente Decklacke auf Schichten aus wäßrigen oder lösemittelhaltigen Basislakken für härtbare Mehrschichtüberzüge aufgetragen werden.

Es können auch pigmentierte Überzugsmittel bereitgestellt werden. Hierzu können übliche organische und/oder anorganische Farbpigmente und/oder Füllstoffe, wie Titandioxid, mikronisiertes Titandioxid, Eisenoxidpigmente, Ruß, Siliciumdioxid, Bariumsulfat, mikronisierter Glimmer, Talkum, Azopigmente, Phthalocyaninpigmente, Chinacridon- oder Pyrrolopyrrolpigmente eingesetzt werden.

Die erfindungsgemäßen Überzugsmittel werden nach bekannten Verfahren, wie z.B. Spritzen, Tauchen, Rollen oder Rakeln, appliziert. Dabei wird auf das gegebenenfalls schon mit weiteren Lackschichten versehene Substrat der Decklacküberzug aufgetragen. Die erfindungsgemäßen Überzugsmittel können auch unter Verwendung von überkritischem Kohlendioxid als Lösemittel im Spritzverfahren appliziert werden. Dabei kann der Gehalt an organischen Lösemitteln stark verringert werden. Nach einer Abdunstphase wird das applizierte Überzugsmittel bevorzugt durch Erwärmen vernetzt. Die Einbrenntemperaturen liegen bevorzugt zwischen 110 und 160°C, besonders bevorzugt zwischen 120 bis 150°C. Die Härtungszeiten liegen beispielsweise in der Größenordnung von 20 bis 40 Minuten. Die Schichtdicke des eingebrannten Films beträgt ca. 15 - 50 µm. Dabei entsteht ein vernetzter, harter, glänzender Lacküberzug. Eine bevorzugte Ausführungsform ist die Applikation des erfindungsgemäßen Überzugsmittels als Klarlacküberzug auf einen Basislack. Dabei kann naß-in-naß gearbeitet werden, oder der Basislack wird vorher durch Erwärmen getrocknet. Es entsteht eine besonders gute Haftung der beiden Schichten.

Mit erfindungsgemäß als Klarlacke formulierten Überzugsmitteln können beispielsweise Basislacke überlackiert werden, die übliche Decklackpigmente enthalten können, bevorzugt enthalten die Basislacke Effektpigmente, wie z.B. Metallic-Pigmente. Als Bindemittelbasis des Basislacks werden bevorzugt Polyester-, Polyurethan- oder Acrylatharze eingesetzt. Diese Bindemittel können gegebenenfalls über Vernetzer, z.B. Melaminoder Isocyanatderivate, vernetzt werden.

Die erfindungsgemäßen Überzugsmittel eignen sich besonders für Decklacke oder Klarlacke, die bevorzugt auf dem Kraftfahrzeugsektor, jedoch auch auf anderen Gebieten, eingesetzt werden. Die Verwendung des erfindungsgemäßen Überzugsmittels in der Mehrschichtlackierung ist besonders für die Automobilserien-Lackierung geeignet, es kann jedoch auch für andere Zwecke verwendet werden, wie z.B. für Haushaltsgeräte oder in der Möbelindustrie.

Die erfindungsgemäßen Überzugsmittel sind besonders geeignet zur Herstellung einer transparenten Deckschicht eines ofentrocknenden Mehrschichtüberzugs. Sie eignen sich insbesondere für die Serienlackierung von Kraftfahrzeugkarossieren und deren Teilen.

Die erfindungsgemäßen Überzugsmittel zeichnen sich durch einen hohen Verarbeitungsfestkörpergehalt in der Größenordnung von beispielsweise 44 bis 60 Gew.-%, bezogen auf das gesamte verarbeitbare Überzugsmittel aus. Die unter Verwendung der erfindungsgemäßen Überzugsmittel hergestellten Decklackschichten, z.B. Klarlackschichten zeichnen sich durch eine überlegene Säurebeständigkeit, insbesondere Schwefelsäurebeständigkeit, aus.

Die folgenden Beispiele dienen zur Erläuterung der Erfindung. Alle Teile beziehen sich auf das Gewicht.

### Herstellung von Urethan-Prepolymeren

### Beispiel 1

In eine für eine Polyesterharzsynthese geeignete Reaktionsapparatur werden 219,0 g (1,422 Mol) Hexahydrophthalsäureanhydrid und 369,6 g (2,310 Mol) 2-Ethyl-2-Butylpropandiol-1,3 eingewogen und langsam aufgeschmolzen. Nach Verflüssigung der Reaktionskomponenten wird unter Rühren und Wasserabspaltung innerhalb von 5 Stunden auf 210°C geheizt. Danach wird die Temperatur auf 240°C gesteigert, ohne daß die Kolonnenkopftemperatur 100°C überschreitet. Nach Erreichen einer SZ von 7,5 wird auf 120°C abgekühlt und mit 450 g Butylacetat verdünnt. Anschließend werden 315,8 g (1,422 Mol) Isophorondiisocyanat zugegeben und bei 100°C reagiert, bis eine NCO-Zahl von 5,0 erreicht ist. Mit 123,0 g (1,414 Mol) Methylethylketoxim werden die restlichen freien NCO-Gruppen blockiert bei 100°C. Die Urethan-Prepolymeren-Lösung hat einen Festkörper von 55,0 %, eine Viskosität von 260 mPas/25°C, eine Säurezahl von 5,5 mg KOH/g und einen NCO-Wert < 0,1.

### Beispiel 2

In eine für eine Polyesterharzsynthese geeignete Reaktionsapparatur werden 241,9 g (1,570 Mol) Hexahydrophthalsäureanhydrid und 336,7 g (2,551 Mol) 2,2-Diethylpropandiol-1,3 eingewogen und langsam aufgeschmolzen. Nach Verflüssigung der Reaktionskomponenten wird unter Rühren und Wasserabspaltung innerhalb von 5 Stunden auf 210°C geheizt. Danach wird die Temperatur auf 240°C gesteigert, ohne daß die Kolonnenkopftemperatur 100°C überschreitet. Nach Erreichen einer SZ von 7,8 wird auf 120°C abgekühlt und mit 450 g Butylacetat verdünnt. Anschließend werden 348,7 g (1,570 Mol) Isophorondiisocyanat zugegeben und bei 100°C reagiert, bis eine NCO-Zahl von 5,4 erreicht ist. Mit 101,4 g (1,166 Mol) Methylethylketoxim werden die restlichen freien NCO-Gruppen blockiert bei 100°C. Die Urethan-Prepolymeren-Lösung hat einen Festkörper von 54,9 %, eine Viskosität von 230 mPas/25°C, eine Säurezahl von 5,6 mg KOH/g und einen NCO-Wert < 0,1.

### Beispiel 3

In eine für eine Polyesterharzsynthese geeignete Reaktionsapparatur werden 139,2 g (0,904 Mol) Hexahydrophthalsäureanhydrid, 144,6 g (0,904 Mol), 2-Ethyl-2-Butylpropandiol-1,3 und 55,5 g (0,603 Mol) Glycerin eingewogen und langsam aufgeschmolzen. Nach Verflüssigung der Reaktionskomponenten wird unter Rühren und Wasserabspaltung innerhalb von 5 Stunden auf 210°C geheizt. Danach wird die Temperatur auf 240°C gesteigert, ohne daß die Kolonnenkopftemperatur 100°C überschreitet. Nach Erreichen einer SZ von 29,2 wird auf 120°C abgekühlt und mit 450 g Butylacetat verdünnt. Anschließend werden 476,6 g (2,147 Mol) Isophorondiisocyanat zugegeben und bei 100°C reagiert, bis eine NCO-Zahl von 12,8 erreicht ist. Mit 196,1 g (2,254 Mol) Methylethylketoxim werden die restlichen freien NCO-Gruppen bei 100°C blockiert. Die Urethan-Prepolymeren-Lösung hat einen Festkörper von 55,0 %, eine Viskosität von 1480 mPas/25°C, eine Säurezahl von 12,5 mg KOH/g und einen NCO-Wert < 0,1.

### Beispiel 4

In eine für eine Polyesterharzsynthese geeignete Reaktionsapparatur werden 185,5 g (1,204 Mol) Hexahydrophthalsäureanhydrid, 192,7 g (1,204 Mol 2-Ethyl-2-Butylpropandiol-1,3 und 107,6 g (0,803 Mol) Hexantriol-1,2,6 eingewogen und langsam aufgeschmolzen. Nach Verflüssigung der Reaktionskomponenten wird unter Rühren und Wasserabspaltung innerhalb von 5 Stunden auf 210°C geheizt. Danach wird die Temperatur auf 240°C gesteigert, ohne daß die Kolonnenkopftemperatur 100°C überschreitet. Nach Erreichen einer SZ von 28,2 wird auf 120°C abgekühlt und mit 450 g Butylacetat verdünnt. Anschließend werden 376,4 g (1,695 Mol) Isophorondiisocyanat zugegeben und bei 100°C reagiert, bis eine NCO-Zahl von 4,1 erreicht ist. Mit 154,9 g (1,780 Mol) Methylethylketoxim werden die restlichen freien NCO-Gruppen blockiert bei 100°C. Die Urethan-Prepolymeren-Lösung hat einen Festkörper von 55,0 %, eine Viskosität von 7000 mPas/25°C, eine Säurezahl von 16,9 mg KOH/g und einen NCO-Wert < 0,1.

### Beispiel 5

In eine für eine Polyestersynthese geeignete Reaktionsapparatur werden 165,1 g (1,072 Mol) Hexahydrophthalsäureanhydrid, 126,5 g (1,072 Mol) Hexandiol-1,6, 65,8 g (0,715 Mol) Glycerin und 47,8 g (0,357 Mol) Dimethylolpropionsäure eingewogen und langsam aufgeschmolzen. Nach Verflüssigung der Reaktionskomponenten wird unter Rühren und Wasserabspaltung innerhalb von 5 Stunden auf 210°C geheizt. Danach wird die Temperatur auf 240°C gesteigert, ohne daß die Kolonnenkopftemperatur 100°C überschreitet. Nach Erreichen einer SZ von 18,8 mg KOH/g wird auf 120°C abgekühlt und mit 450 g Butylacetat verdünnt. Anschließend werden 436,5 g (1,966 Mol) Isophorondiisocyanat zugegeben und bei 100°C reagiert, bis eine NCO-Zahl von 5,4 erreicht ist. Mit 179,6 g (1,966 Mol) Methylethylketoxim werden die restlichen freien NCO-Gruppen bei 100°C blockiert. Nach Verdünnung mit 270 g Butylacetat weist die Urethan-Prepolymeren-Lösung einen Festkörper von 55,4 %, eine Viskosität von 2200 mPa.s/25°C und einen NCO-Wert < 0,1 auf. Die Säurezahl beträgt 7,2 mg KOH/g bezogen auf Festharz.

### Beispiel 6

In eine für eine Polyestersynthese geeignete Reaktionsapparatur werden 250,9 g (1,629 Mol) Hexahydrophthalsäureanhydrid, 298,5 g (2,530 Mol) Hexandiol-1,6 eingewogen und langsam aufgeschmolzen. Nach Verflüssigung der Reaktionskomponenten wird unter Rühren und Wasserabspaltung innerhalb von 5 Stunden auf 210°C geheizt. Danach wird die Temperatur auf 240°C gesteigert, ohne daß die Kolonnenkopftemperatur 100°C überschreitet. Nach Erreichen einer SZ von 11,8 mg KOH/g wird auf 120°C abgekühlt und mit 450 g Butylacetat verdünnt. Anschließend werden 361,7 g (1,629 Mol) Isophorondiisocyanat zugegeben und bei 100°C reagiert, bis eine NCO-Zahl von 3,8 erreicht ist. Mit 117,0 g (1,280 Mol) Methylethylketoxim werden die restlichen freien NCO-Gruppen bei 100°C blockiert. Nach Verdünnung mit 270 g Butylacetat weist die Urethan-Prepolymeren-Lösung einen Festkörper von 55,1 %, eine Viskosität von 210 mPa.s/25°C und einen NCO-Wert < 0,1 auf. Die Säurezahl beträgt 5,8 mg KOH/g bezogen auf Festharz.

### Beispiel 7

In eine für eine Polyestersynthese geeignete Reaktionsapparatur werden 160,7 g (1,043 Mol) Hexahydrophthalsäureanhydrid, 150,2 g (1,043 Mol) Cyclohexandimethanol, 64,0 g (0,696 Mol) Glycerin und 47,8 g (0,357 Mol) Dimethylolpropionsäure eingewogen und langsam aufgeschmolzen. Nach Verflüssigung der Reaktionskomponenten wird unter Rühren und Wasserabspaltung innerhalb von 5 Stunden auf 210°C geheizt. Danach wird die Temperatur auf 240°C gesteigert, ohne daß die Kolonnenkopftemperatur 100°C überschreitet. Nach Erreichen einer SZ von 20,4 mg KOH/g wird auf 120°C abgekühlt und mit 450 g Butylacetat verdünnt. Anschließend werden 423,7 g (1,908 Mol) Isophorondiisocyanat zugegeben und bei 100°C reagiert, bis eine NCO-Zahl von 5,7 erreicht ist. Mit 174,3 g (1,908 Mol) Methylethylketoxim werden die restlichen freien NCO-Gruppen bei 100°C blockiert. Nach Verdünnung mit 270 g Butylacetat weist die Urethan-Prepolymeren-Lösung einen Festkörper von 55,6 %, eine Viskosität von 5900 mPa.s/25°C und einen NCO-Wert < 0,1 auf. Die Säurezahl beträgt 7,8 mg KOH/g bezogen auf Festharz.

### Beispiel 8

In eine für eine Polyestersynthese geeignete Reaktionsapparatur werden 235,6 g (1,530 Mol) Hexahydrophthalsäureanhydrid, 341,2 g (2,369 Mol) Cyclohexandimethanol eingewogen und langsam aufgeschmolzen. Nach Verflüssigung der Reaktionskomponenten wird unter Rühren und Wasserabspaltung innerhalb von 5 Stunden auf 210°C geheizt. Danach wird die Temperatur auf 240°C gesteigert, ohne daß die Kolonnenkopftemperatur 100°C überschreitet. Nach Erreichen einer SZ von 11,9 mg KOH/g wird auf 120°C abgekühlt und mit 450 g Butylacetat verdünnt. Anschließend werden 339,6 g (1,530 Mol) Isophorondiisocyanat zugegeben und bei 100°C reagiert, bis eine NCO-Zahl von 3,5 erreicht ist. Mit 109,8 g (1,202 Mol) Methylethylketoxim werden die restlichen freien NCO-Gruppen bei 100°C blockiert. Nach Verdünnung mit 270 g Butylacetat weist die Urethan-Prepolymeren-Lösung einen Festkörper von 55,5 %, eine Viskosität von 410 mPa.s/25°C und einen NCO-Wert < 0,1 auf. Die Säurezahl beträgt 5,5 mg KOH/g bezogen auf Festharz.

### Beispiel 9

### Herstellung eines (Meth)acrylcopolymerisats

In einem 2-Liter-Dreihals-Schliffkolben, der mit einem Rührwerk, Kontaktthermometer, Kugelkühler und Tropftrichter ausgerüstet ist, werden 173 g SOLVESSO 150 (Handelsprodukt der Shell AG) und 5 g n-Butanol, vorgelegt und unter Rühren bei eingeschalteter Rückflußkühlung auf 152°C geheizt. Innerhalb von 6 Stunden wird eine Mischung aus 67 g Acrylsäure, 160 g Styrol, 150 g Butylacrylat, 65 g 2-Hydroxyethylacrylat, 220 g CARDURA E10 (Handelsprodukt der Shell AG), 16 g Di-tert.-Butylperoxid und 22 g Tert.-Butylperoctoat kontinuierlich zudosiert. Anschließend wird der Ansatz 4 Stunden bei 150°C nachpolymerisiert, auf 80°C abgekühlt und mit 62 g SOLVESSO 100 und 60 g n-Butanol verdünnt. Die Polymerisat-Lösung hatte einen Festkörper von 70,1 %, eine Säurezahl von 8,5, eine OH-Zahl von 81 und eine Viskosität von 1490 mPa.s/25°C.

### Herstellung von Klarlacken

### Beispiel 10

Ein einkomponentiger Klarlack wurde hergestellt durch homogenes Vermischen von 37,3 Teilen des (Meth)acryl-Copolymerisats aus Beispiel 9, 20,5 Teilen einer handelsüblichen, 58 %igen Lösung eines hochreaktiven butanolveretherten Melaminharzes in Butanol/Xylol, 17,3 Teilen des Urethan-Prepolymeren aus Beispiel 1, 0,5 Teilen eines handelsüblichen Lichtschutzmittels vom Typ Benztriazol, 0,5 Teilen eines handelsüblichen Lichtschutzmittels vom Typ HALS, 0,5 Teilen einer 10 %igen Dibutylzinndulaurat-Lösung in Xylol, 0,2 Teilen Silikonöl, 1 Teil n-Butanol, 1,4 Teilen Butyldiglykol und 20,8 Teilen SOLVESSO 100 (Handelsprodukt der Shell AG).

### Beispiel 11

Analog zu Beispiel 10 wurde ein einkomponentiger Klarlack hergestellt unter Verwendung von 17,3 Teilen des Urethan-Prepolymeren aus Beispiel 3.

### Beispiel 12

Analog zu Beispiel 10 wurde ein einkomponentiger Klarlack hergestellt unter Verwendung von 17,3 Teilen des Urethan-Prepolymeren aus Beispiel 4.

### Beispiel 13

Analog zu Beispiel 10 wurde ein einkomponentiger Klarlack hergestellt unter Verwendung von 17,3 Teilen des Urethan-Prepolymeren aus Beispiel 5.

### Beispiel 14

Analog zu Beispiel 10 wurde ein einkomponentiger Klarlack hergestellt unter Verwendung von 17,3 Teilen des Urethan-Prepolymeren aus Beispiel 6.

### Beispiel 15

Analog zu Beispiel 10 wurde ein einkomponentiger Klarlack hergestellt unter Verwendung von 17,3 Teilen des Urethan-Prepolymeren aus Beispiel 7.

### Beispiel 16

Analog zu Beispiel 10 wurde ein einkomponentiger Klarlack hergestellt unter Verwendung von 17,3 Teilen des Urethan-Prepolymeren aus Beispiel 8.

Mit in der Automobilserienlackierung verwendetem handelsüblichen kathodisch abscheidbarem Elektrotauchlack (KTL) (18 µm) und handelsüblichem Füller (35 µm) vorbeschichtete Karosseriebleche werden mit handelsüblichem wasserverdünnbarem Metallicbasislack in einer Trockenschichtdicke von 15 µm lackiert und 6 min. bei 80°C vorgetrocknet. Direkt anschließend wird der Klarlack aus den Klarlackbeispielen 10 bis 13 in einer Trockenschichtdicke von 35 µm durch Spritzauftrag naß-in-naß appliziert und nach 5 min. Ablüften bei Raumtemperatur 20 min. bei 140°C (Objekttemperatur) eingebrannt.

Analog wurden Vergleichsversuche mit Lacken des Stands der Technik durchgeführt. Die erhaltenen Ergebnisse sind in der folgenden Tabelle aufgeführt. Die Tests wurden nach allgemeinen Industrienormen durchgeführt. Zur Prüfung der Klarlacke auf Schwefelsäurebeständigkeit wurde der Tropfen-Test mit 10 %iger bzw. 38 %iger H₂SO₄ gewählt. Die Prüfbleche werden auf eine beheizbare Platte gelegt und auf 65°C geheizt. Dabei muß gewährleistet sein, daß die Bleche zur optimalen Temperaturübertragung plan aufliegen. Am Ende der Aufheizphase, d.h. bei 65°C wird pro Minute ein Tropfen auf die Klarlackoberfläche appliziert. Die Gesamtzeit beträgt 30 Minuten. Nach Ablauf der Prüfzeit wird die Lackierung mit Wasser abgewaschen. Wenn notwendig, kann zum Reinigen zusätzlich eine Bürste verwendet werden.

Zur Beurteilung der Schwefelsäurebeständigkeit wird die Einwirkzeit in Minuten angegeben, bei der die erste sichtbare Filmveränderung (Quellung), Beschädigung (Vermattung) und der Basislack-Angriff auftrat.

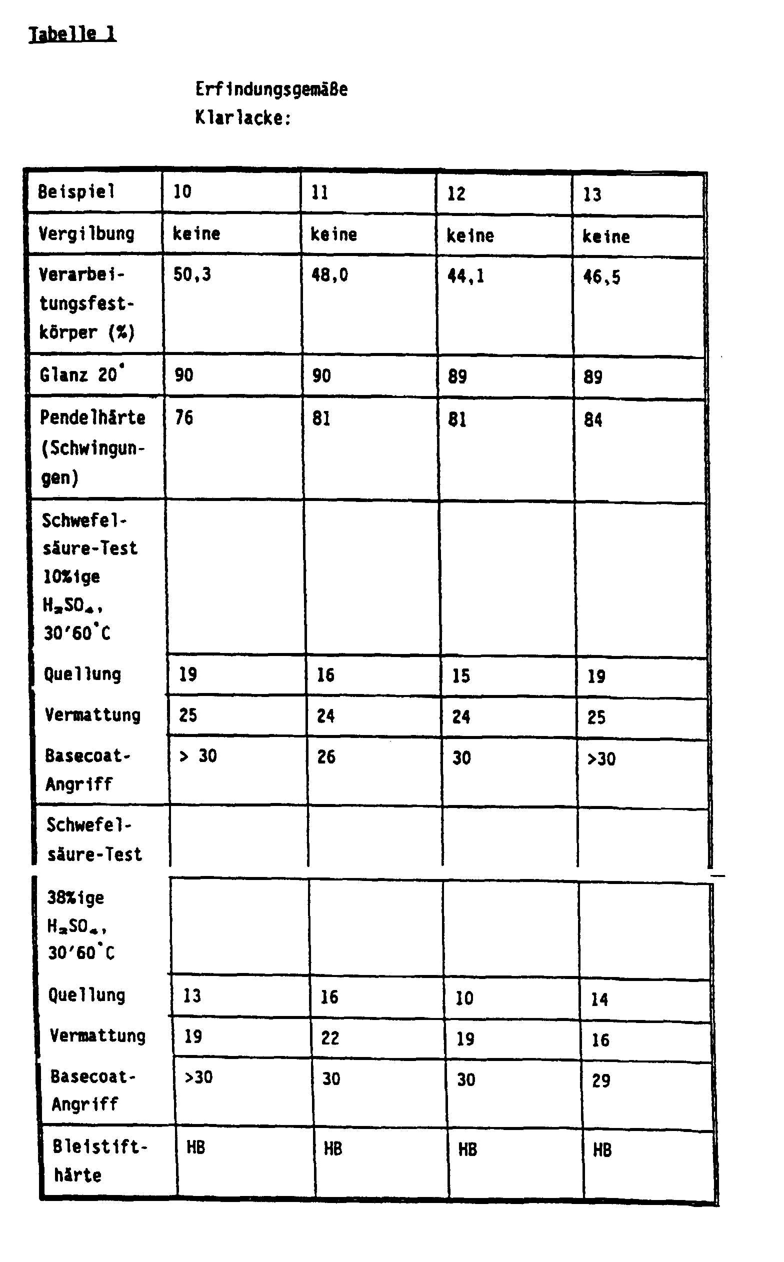

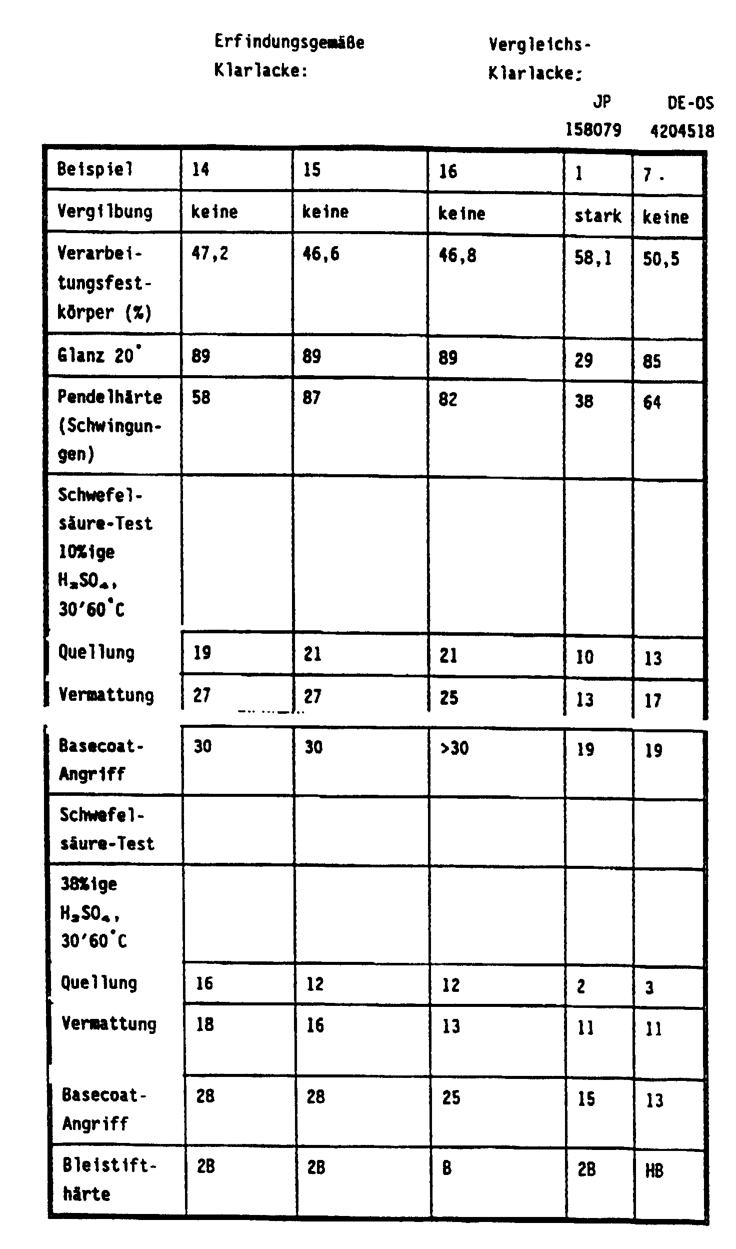

## Patentansprüche

1. Nicht-wäßriges Überzugsmittel auf der Basis hydroxylfunktioneller (Meth)acryl-Copolymerisate und carboxylfunktioneller, geblockter Urethan-Prepolymerer, Vernetzungsmittel, lacküblicher Additive und Lösemittel, dadurch gekennzeichnet, daß sie Bindemittel enthalten auf der Basis von
A) 5,0 bis 40,0 Gew.-% eines oder mehrerer carboxylfunktioneller Urethan-Prepolymerer, mit einer Hydroxylzahl von 0 bis 80, einer Säurezahl von 5 bis 50 und einem Gewichtsmittel des Molekulargewichts (Mw) von 500 bis 5000, die erhältlich sind durch Reaktion von:
a1) 10 bis 50 Mol-% eines oder mehrerer Alkandiole oder Cycloalkandiole,
a2) 10 bis 30 Mol-% einer oder mehrerer Polycarbonsäuren oder deren Anhydriden,
a3) 0 bis 30 Mol-% eines oder mehrerer Polyole mit mindestens drei OH-Gruppen im Molekül,
a4) 0 bis 20 Mol-% einer oder mehrerer Hydroxycarbonsäuren mit mindestens einer Hydroxylgruppe und mindestens einer Carboxylgruppe im Molekül,
a5) 10 bis 40 Mol-% eines oder mehrerer aliphatischer, cycloaliphatischer und/oder araliphatischer Di- und/oder Polyisocyanate, und
a6) 10 bis 40 Mol-% eines oder mehrerer monofunktioneller Blokkierungsmittel für freie NCO-Gruppen,
wobei die Summe der Mol-% a1) bis a6) sich jeweils zu 100 Mol-% ergänzt,
B) 30,0 bis 70,0 Gew.-% eines oder mehrerer hydroxylgruppenhaltiger (Meth)acryl-Copolymerisate, mit einem Gewichtsmittel der Molmasse (Mw) von 2000 bis 20000, einer Säurezahl von 1 bis 50 mg KOH/g und einer OH-Zahl von 30 bis 200,
C) 0 bis 50,0 Gew.-% eines oder mehrerer hydroxylfunktioneller Polyester mit einer OH-Zahl von 40 bis 200 und
D) 5,0 bis 40,0 Gew.-% eines oder mehrerer zusätzlicher Vernetzungsmittel,
wobei die Summe der Gew.-% der Komponenten A) bis D) sich jeweils zu 100 Gew.-% ergänzt.

2. Nicht-wäßriges Überzugsmittel nach Anspruch 1, dadurch gekennzeichnet, daß die Komponente A) erhältlich ist durch Bildung eines Polykondensat-Vorprodukts aus den Komponenten a1), a2) und gegebenenfalls a3) und/oder a4), anschließende Umsetzung dieses Vorproduktes mit der Komponente a5) in einer derartigen Menge, daß ein Überschuß an freien NCO-Gruppen vorliegt, und anschließende Blockierung der freien NCO-Gruppen mit der Komponente a6).

3. Nicht-wäßriges Überzugsmittel nach Anspruch 1 oder 2, dadurch gekennzeichnet, daß als Komponente Aa1) ein oder mehrere 2,2-Dialkylalkandiole eingesetzt werden.

4. Nicht-wäßriges Überzugsmittel nach Anspruch 1, 2 oder 3, dadurch gekennzeichnet, daß als Komponente Aa2) aliphatische und/oder cycloaliphatische Dicarbonsäuren eingesetzt werden.

5. Nicht-wäßriges Überzugsmittel nach einem der vorhergehenden Ansprüche, dadurch gekennzeichnet, daß als Komponente Aa3) Polyole mit mindestens einer sekundären OH-Gruppe im Molekül eingesetzt werden.

6. Nicht-wäßriges Überzugsmittel nach einem der vorhergehenden Ansprüche, dadurch gekennzeichnet, daß als Komponente Aa4) Hydroxycarbonsäuren mit mindestens einer tertiär gebundenen Carboxylgruppe eingesetzt werden.

7. Nicht-wäßriges Überzugsmittel nach Anspruch 1 bis 6, dadurch gekennzeichnet, daß als Komponente C) ein oder mehrere Polyester eingesetzt werden mit einer Hydroxylzahl von 40 - 200, einer Säurezahl von 1 bis 50 und einem Gewichtsmittel des Molekulargewichts (Mw) von 500 bis 4000.

8. Nicht-wäßriges Überzugsmittel nach Anspruch 1 bis 7, dadurch gekennzeichnet, das als Komponente D) ein oder mehrere Aminoplastharze eingesetzt werden.

9. Nicht-wäßriges Überzugsmittel nach Anspruch 1 bis 8, dadurch gekennzeichnet, daß in der Komponente D) ein oder mehrere Polyisocyanate eingesetzt werden.

10. Nicht-wäßriges Überzugsmittel nach einem der Ansprüche 1 bis 9, dadurch gekennzeichnet, daß es pigmentfrei oder mit transparenten Pigmenten als Klarlack formuliert ist.

11. Verfahren zur Herstellung von Mehrschichtüberzügen durch Auftrag einer Basislackschicht auf ein gegebenenfalls bereits mit einer oder mehreren Überzugsschichten versehenes Substrat, und Überlakkieren der erhaltenen Basislackschicht nach dem Trocknen oder naß-in-naß mit einer Decklackschicht aus einem nicht-wäßrigen transparenten Überzugsmittel nach einem der Ansprüche 1 bis 10.

12. Verfahren nach Anspruch 11, dadurch gekennzeichnet, daß es zur Herstellung von Mehrschichtlackierungen von Kraftfahrzeugkarosserien oder deren Teilen durchgeführt wird.

13. Verwendung der nicht-wäßrigen Überzugsmittel nach einem der Ansprüche 1 bis 10 zur Herstellung transparenter Deckschichten von Mehrschichtüberzügen, insbesondere auf dem Kraftfahrzeugsektor.

## Claims

1. Non-aqueous coating media based on hydroxy-functional (meth)acrylic copolymers and carboxy-functional, blocked urethane prepolymers, crosslinking agents, customary lacquer additives and solvents, characterised in that they contain binder vehicles based on
A) 5.0 to 40.0 % by weight of one or more carboxy-functional urethane prepolymers with a hydroxyl number of 0 to 80, an acid number of 5 to 50 and a weight average molecular weight (Mw) of 500 to 5000, which are obtainable by the reaction of:
a1) 10 to 50 mole % of one or more alkanediols or cycloalkanediols,
a2) 10 to 30 mole % of one or more polycarboxylic acids or anhydrides thereof,
a3) 0 to 30 mole % of one or more polyols containing at least three OH groups in their molecule,
a4) 0 to 20 mole % of one or more hydroxycarboxylic acids containing at least one hydroxyl group and at least one carboxyl group in their molecule,
a5) 10 to 40 mole % of one or more aliphatic, cycloaliphatic and/or araliphatic di- and/or polyisocyanates, and
a6) 10 to 40 mole % of one or more mono-functional blocking agents for free NCO groups,
wherein the sum of the molar percentages of a1) to a6) adds up to 100 mole % in each case,
B) 30.0 to 70.0 % by weight of one or more (meth)acrylic copolymers, which contain hydroxyl groups and which have a weight average molecular weight (Mw) of 2000 to 20,000, and acid number of 1 to 50 mg KOH/g and an OH number of 30 to 200,
C) 0 to 50.0 % by weight of one or more hydroxy-functional polyesters with an OH number of 40 to 200, and
D) 5.0 to 40.0 % by weight of one or more additional crosslinking agents,
wherein the sum of the percentages by weight of components A) to D) adds up to 100 % by weight in each case.

2. Non-aqueous coating media according to claim 1, characterised in that component A) is obtainable by forming a condensation polymer preliminary product from components a1), a2) and optionally a3) and/or a4), subsequently reacting this preliminary product with component a5) in an amount such that an excess of free NCO groups is present, and subsequently blocking the free NCO groups with component a6).

3. Non-aqueous coating media according to claims 1 or 2, characterised in that one or more 2,2-dialkylalkanediols are used as component Aa1).

4. Non-aqueous coating media according to claims 1, 2 or 3, characterised in that aliphatic and/or cycloaliphatic dicarboxylic acids are used as component Aa2).

5. Non-aqueous coating media according to any one of the preceding claims, characterised in that polyols comprising at least one secondary OH group in their molecule are used as component Aa3).

6. Non-aqueous coating media according to any one of the preceding claims, characterised in that hydroxycarboxylic acids comprising at least one tertiarybonded carboxyl group are used as component Aa4).

7. Non-aqueous coating media according to claims 1 to 6, characterised in that one or more polyesters which have a hydroxyl number of 40 - 200, an acid number of 1 to 50 and a weight average molecular weight (Mw) of 500 to 4000 are used as component C).

8. Non-aqueous coating media according to claims 1 to 7, characterised in that one or more amino plastic resins are used as component D).

9. Non-aqueous coating media according to claims 1 to 8, characterised in that one or more polyisocyanates are used in component D).

10. Non-aqueous coating media according to any one of claims 1 to 9, characterised in that it is formulated, free from pigment or comprising transparent pigments, as a clear lacquer.

11. A process for producing multi-layer coatings by the application of a base lacquer coat to a substrate, which is optionally already provided with one or more coating layers, and overcoating the base lacquer coat which is obtained, after drying or wet-into-wet, with a covering lacquer coat comprising a non-aqueous transparent coating medium according to any one of claims 1 to 10.

12. A process according to claim 11, characterised in that is carried out for the production of multi-layer lacquer coatings of motor vehicle bodies or parts thereof.

13. The use of the non-aqueous coating media according to any one of claims 1 to 10 for the production of transparent covering coats of multi-layer coatings, particularly in the motor vehicle sector.

## Revendications

1. Matériau de revêtement non aqueux à base de composés de copolymérisation (méth)acryliques ayant des fonctions hydroxyle, et de prépolymères d'uréthanne bloqués, ayant des fonctions carboxyle, d'agents réticulants, d'additifs et de solvants usuels des vernis, caractérisé en ce qu'il contient des liants à base de
A) 5,0 à 40,0% en poids d'un ou de plusieurs prépolymères d'uréthanne ayant des fonctions carboxyle, avec un indice hydroxyle de 0 à 80, un indice d'acide de 5 à 50 et une masse moléculaire moyenne en masse (Mm) de 500 à 5000, qu'on peut obtenir en faisant réagir :
a1) 10 à 50% en mole d'un ou de plusieurs alcanediols ou cycloalcanediols,
a2) 10 à 30% en mole d'un ou de plusieurs acides polycarboxyliques ou de leurs anhydrides,
a3) 0 à 30% en mole d'un ou de plusieurs polyols avec au moins trois groupes OH dans la molécule,
a4) 0 à 20% en mole d'un ou de plusieurs acides hydroxy-carboxyliques avec au moins un groupe hydroxyle et au moins un groupe carboxyle dans la molécule,
a5) 10 à 40% en mole d'un ou de plusieurs di- et/ou polyisocyanates aliphatiques, cycloaliphatiques et/ou araliphatiques, et
a6) 10 à 40% en mole d'un ou de plusieurs agents de blocage monofonctionnels pour groupes NCO libres,
dans lequel la somme des pourcentages en mole de a1) à a6) donne toujours un total de 100% en mole,
B) 30,0 à 70,0% en poids d'un ou de plusieurs composés de copolymérisation (méth)acryliques ayant des fonctions hydroxyle, avec une masse moléculaire moyenne en masse (Mm) de 2000 à 20000, un indice d'acide de 1 à 50 mg KOH/g et un indice OH de 30 à 200,
C) 0 à 50,0% en poids d'un ou de plusieurs polyesters ayant des fonctions hydroxyle, avec un indice OH de 40 à 200, et
D) 5,0 à 40,0% en poids d'un ou de plusieurs agents de réticulation supplémentaires,
dans lequel la somme des pourcentages en poids des composants A) à D) donne toujours un total de 100% en poids.

2. Matériau de revêtement non aqueux selon la revendication 1, caractérisé en ce que, l'on peut obtenir le composant A) par formation d'un produit préliminaire sous forme d'un polycondensat des composants a1), a2) et éventuellement a3) et/ou a4), et ensuite en faisant réagir ce produit préliminaire avec le composant a5) en une quantité telle qu'il y ait un excès de groupes NCO libres, et en bloquant ensuite les groupes NCO libres avec le composant a6).

3. Matériau de revêtement non aqueux selon la revendication 1 ou 2, caractérisé en ce que l'on utilise, comme composant Aa1), un ou plusieurs 2,2-dialkylalcanediols.

4. Matériau de revêtement non aqueux selon la revendication 1, 2 ou 3, caractérisé en ce que l'on utilise, comme composant Aa2), des acides di-carboxyliques aliphatiques et/ou cycloaliphatiques.

5. Matériau de revêtement non aqueux selon l'une des revendications précédentes, caractérisé en ce que l'on utilise, comme composant Aa3), des polyols ayant au moins un groupe OH secondaire dans la molécule.

6. Matériau de revêtement non aqueux selon l'une des revendications précédentes, caractérisé en ce que l'on utilise, comme composant Aa4), des acides hydroxycarboxyliques ayant au moins un groupe carboxyle lié à un carbone tertiaire.

7. Matériau de revêtement non aqueux selon les revendications 1 à 6, caractérisé en ce que l'on utilise, comme composant C), un ou plusieurs polyesters avec un indice hydroxyle de 40 - 200, un indice d'acide de 1 à 50 et une masse moléculaire moyenne en masse (Mm) de 500 à 4000.

8. Matériau de revêtement non aqueux selon les revendications 1 à 7, caractérisé en ce que l'on utilise, comme composant D), une ou plusieurs résines aminoplastes.

9. Matériau de revêtement non aqueux selon les revendications 1 à 8, caractérisé en ce que l'on utilise, dans le composant D), un ou plusieurs polyisocyanates.

10. Matériau de revêtement non aqueux selon l'une des revendications 1 à 9, caractérisé en ce qu'il est formulé sous la forme d'un vernis incolore sans pigment ou avec des pigments transparents.

11. Procédé pour la fabrication de revêtements multicouche par les étapes consistant à déposer une couche de laque de base sur un substrat éventuellement déjà pourvu d'une ou plusieurs couches de revêtement, et à recouvrir la couche de laque de base obtenue, après séchage ou humide sur humide, avec une couche de laque de couverture constituée d'un matériau de revêtement transparent non aqueux selon l'une des revendications 1 à 10.

12. Procédé selon la revendication 11, caractérisé en ce qu'il est utilisé pour la fabrication de revêtements multicouche de carrosseries de véhicules automobiles ou de leurs éléments.

13. Utilisation des revêtements non aqueux selon l'une des revendications 1 à 10 pour la fabrication de couches de couverture transparentes de revêtements multicouche, en particulier dans le secteur des véhicules automobiles.
